# EUROPEAN PATENT APPLICATION

(11) **EP 1 755 050 A1**
(43) Date of publication of application: **21.02.2007**
(21) Application number: 05107593.5
(22) Date of filing: 18.08.2005
(51) Int. Cl.: G06F 17/30

(54) **A data processing system and method of storing a dataset having a hierarchical data structure in a database**

(71) Applicant: SAP AG, 69190 Walldorf (DE)
(72) Inventor: Krieg, Jan, 69234, Dielheim (DE)
(74) Representative: Richardt, Markus Albert

(57) **Abstract**

The present invention relates to a data processing system comprising:
- data dictionary means (104; 504) for storing data descriptive of predefined hierarchical data structures (D1, D2, ..., Dn,...DN), each data structure comprising a plurality of data fields, each data field having a unique field name (FN₁, FN₂, FN₃, ... FNₖ, ...) and at least one field attribute,
- volatile storage means (102; 502) for storing a dataset (110), the dataset being an instance of one of the data structures, the dataset having a unique dataset name (i),
- serializer means (112; 512) for conversion of the dataset into a data string (132),
- means (126) for generating an access key for the data string,
- non-volatile storage means (106, 116; 506, 516) for storing a database table (118),
- database export means (114; 514) for storing the string in the database table using the access key,
- means (124) for storing an assignment of the access key to the dataset name.

## Description

### Field of the invention

The present invention relates to the field of data processing, and more particularly without limitation to the storage of hierarchical data structures in a database.

### Background and prior art

Typically data is persistently stored in database tables. However, application programs often require datasets that have a more or less complex hierarchical structure.

Efficient storage of such hierarchical datasets in a database is an unresolved problem in the prior art..

### Summary of the invention

In accordance with the present invention there is provided a data processing system comprising data dictionary means for storing data descriptive of predefined hierarchical data structures, each data structure comprising a plurality of data fields, each data field having a unique field name and at least one field attribute, volatile storage means for storing a dataset, the dataset being an instance of one of the data structures, the dataset having a unique dataset name, serializer means for conversion of the dataset into a data string, means for generating an access key for the data string, non-volatile storage means for storing a database table, database export means for storing the string in the database table using the access key, means for storing an assignment of the access key to the dataset name.

The present invention is particularly advantageous as it facilitates storage of a dataset that has a hierarchical data structure in a database table. This is accomplished by serializing the hierarchical dataset into a data string. The data string is stored in a database table using an access key for later retrieval of the string and reconstruction of the dataset.

In accordance with an embodiment of the invention a globally unique identifier (GUID) is generated for the string and used as the access key for storing the string in the database table.

In accordance with an embodiment of the invention the string is split into one or more sub-strings if the string surpasses a predefined maximum length. In this case a counter value that indicates the number of the sub-strings is stored in the database table in addition to the access key.

Data sets can have very different sizes. The invention is particularly advantageous as it facilitates storage of such data sets of very different sizes in a database table in a compact form that is efficiently retrievable and accessible.

In another aspect the present invention relates to a method of storing a dataset having a hierarchical data structure in a database, the method comprising converting the dataset into a data string, generating an access key for the data string, storing the string in a database table using the access key, storing a unique name of the dataset and the assigned access key in a lookup table.

In still another aspect the present invention relates to a data processing system comprising data dictionary means for storing data descriptive of predefined hierarchical data structures, each data structure comprising a plurality of data fields, each data field having a unique field name and at least one field attribute, wherein each data field can have an arbitrary data type such as field, structure, table etc., a database table for storing a string such that the string is accessible by means of an access key, means for storing an assignment of the access key to a unique name of a dataset, the dataset being an instance of one of the data structures, database import means for reading the string from the database table using the access key, deserializer means for conversion of the string into the dataset, and volatile storage means for storing the dataset.

The present invention is particularly advantageous as it facilitates reading a hierarchical dataset from a database table. An access key for reading the dataset from the database table is obtained from a lookup table. By means of the access key the string or a number of sub-strings is read from the database table. If the database table contains a number of sub-strings, the sub-strings are concatenated in order to recover the original string. The string is then deserialized which provides the requested dataset.

In accordance with an embodiment of the invention the data dictionary that contains the descriptions of the data structures used in the data processing system is editable. In other words, the predefined data structures are modifiable. This implies that after storage of a dataset the dataset's data structure can be changed by adding or deleting fields and/or by modifying one of more field attributes. In this case the deserializer identifies identical field names in the string and in the up to date data structure.

If the field names have matching field attributes the data value assigned to the field name and data string is assigned to the respective field in the dataset. If the field attributes do not match, an error message is generated. For example, a mismatch of the field attributes occurs if the length of the field has been shortened which would lead to a loss of data. A mismatch can also occur if the data type of a data field has been changed such as from table to a simple integer field.

If the field name contained in the string does no longer occur in the data structure, the data assigned to that field is ignored as its respective field has been deleted from the data structure and is therefore not of relevancy anymore.

If the data processing system allows to dynamically modify or add data structures during the run-time, the respective structural definition data is also stored for use by the deserializer. Preferably the dynamic changes to the predefined hierarchical data structures and/or the addition of new hierarchical data structures is persistently stored in addition to the data dictionary.

The present invention is particularly advantageous for the processing of so called mass activities. A mass activity is a standardized data processing task that involves the processing of a large number of datasets, such as for the generation of invoices, payment reminders, salary statements, etc.

The serializer / deserializer and export / import functionalities of the present invention can be implemented in a mass activity tool for efficient data storage and data access. Preferably, the mass activity tool has a parallelization component for splitting a given mass activity into multiple parallel processes. The present invention facilitates such parallel processing as it provides short latency times for accessing the datasets.

### Brief description of the drawings

In the following preferred embodiments of the invention will be described in greater detail by way of example only making reference to the drawings in which:
- Figure 1: is a block diagram of a first embodiment of a data processing system of the invention,
- Figure 2: is a flowchart illustrating a method for storing a dataset in a database table,
- Figure 3: is a flowchart illustrating a method for reading a dataset from a database table,
- Figure 4: is a flowchart illustrating a method for deserialization of the string when the data structure definition contained in the data dictionary has been changed after storage of the dataset,
- Figure 5: is a block diagram of a further preferred embodiment of a data processing system of the invention having a mass activity tool,
- Figure 6: is a schematic data entry window for a user's entry of a dataset,
- Figure 7: is a window for viewing the data structure definition and modifying the data structure definition of the data dictionary,
- Figure 8: is a window of a user interface for selecting a mass activity and the datasets for which the selected mass activity is to be performed.

### Detailed description

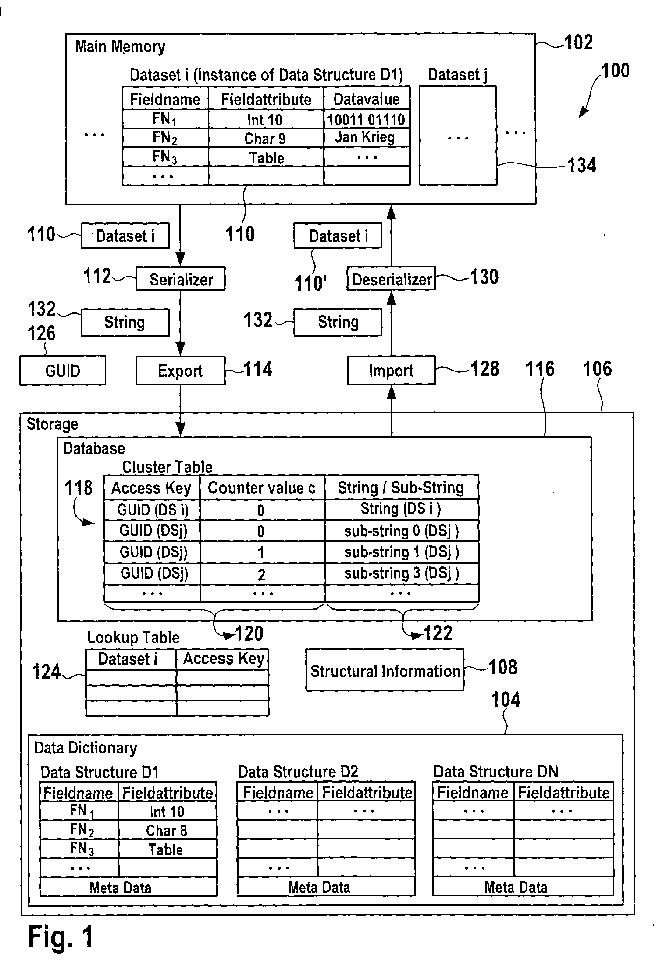

Fig. 1 shows a block diagram of a data processing system 100. The data processing system 100 has a main memory 102 for temporarily storing datasets 110, 134,..., such as dataset i, dataset j,... For example, the dataset i is an instance of a data structure D1 whereas the dataset j can be an instance of the same or another data structure. The data structures that are available in the data processing system 100 are defined in the data dictionary 104 that is persistently stored in a storage 106. Storage 106 is a non-volatile memory, such as a magnetic disc.

The hierarchical data structures are defined in the data dictionary 104 by means of their field names and respective field attributes. For example, a field attribute can indicate that the respective data field is of data type 'structure' or 'table' or another data type.

For example, the data structure D1 has a field name FN₁; the respective data field has a field attribute 'Int 10' by which the type of the data field, i.e. integer length 10, is defined. Likewise the data structure D1 contains a definition of a data field that has field name FN₂ and field attribute 'Char 9' which means that the data field is of type 'character', length 8. Further, the data structure D1 contains a field having field name FN₃ with the field attribute 'table', which means that this field has a tabular structure. In addition, the data structure D1 contains meta data that describe the hierarchical relationships between the defined data fields.

The data dictionary 104 can contain a large number of such definitions of data structures D1, D2,..., Dn,..., DN.

Preferably, the definitions of the data structures contained in the data dictionary 104 are modifiable. For example, data fields of a given data structure can be deleted or added. Further, field attributes of a given data field can also be modifiable, for example by changing the length of the respective data field. Such modifications can be performed during the so called built time of the data processing system 100.

Preferably, the data processing system 100 does allow such modifications of the data structure definitions during run-time. Data descriptive of such changes during run-time can be stored in storage area 108, such as in form of a table that holds this structural information created during run-time, in order to supplement the data dictionary 104. The table that holds this structural information can be held in the main memory 102 during run-time. After program execution it is persistently stored in the storage area 108 for later reference.

The data structures that are defined by the data dictionary 104 and by the storage area 108 are also referred to as 'data types' in the art. Data structures / data types that are modified and/or added during the run-time are also referred to as 'dynamic data types'.

The dataset i stored in the main memory 102 is an instance of the data structure D1 that holds various data values, such as the data value 1001101110 in integer 10 format for the data field FN₁, the data value 'Jan Krieg' of data type character, length 9 for data field FN₂, etc.

The data processing system 100 has a serializer 112 for conversion of a dataset that has a hierarchical data structure into a flat data string. Conversion of a hierarchical dataset into a data string by serialization is as such known from the prior art and is also referred to as 'marshaling'. The inverted transformation for converting the string back to the hierarchical dataset is referred to as deserialization or unmarshaling. Serialization and deserialization techniques are as such known from the prior art, e.g. from US 2004 0044678 A1 and US 2005 0097504 A1.

The serializer 112 can convert a hierarchical dataset into a string, i.e. a serial format, such as into a mark-up language format. Preferably the serializer 112 converts the dataset into an extensible mark-up language (XML) format.

The data processing system 100 has a database export component 114 that is coupled to the serializer 112. The database export component 114 exports the string generated by the serializer 112 into a database 116 that is persistently stored in the storage 106. It is to be noted that the terms "export" and "import" are used here from the perspective of an application program that reads and writes to and from the database 116.

The database 116 has a database table 118 that is a so called 'cluster table'. The database table 118 has a transparent table portion 120 for storage of access keys and counter values in un-encoded transparent form.

The database table 118 has a raw data portion 122 for storing of strings and/or sub-strings. For example the strings and/or sub-strings are stored in the raw data portion 122 in a binary code format, such as in UNICODE (cf. www.unicode.org).

A lookup table 124 is stored in the storage 106 for assigning access keys to datasets. The lookup table 124 is used for obtaining the access key that is required from reading the string and/or the sub-strings obtained from a dataset for recovery of the dataset from the database table 118.

Preferably a globally unique identifier (GUID) is used as an access key. The data processing system 100 has a GUID generator 126 for generating GUID access keys.

The database import component 128 serves for importing data from the database 116 for recovery of a required dataset. The database import component 128 reads the access key of a required dataset from the lookup table 124 for access to the respective entry into the database table 118. If the respective entry consists of a number of sub-strings in its raw data portion 122, the database import component 128 concatenates the sub-strings for providing the original string. The string is then deserialized by the deserializer 130 for providing the dataset 110'. Usually the dataset 110' is identical to the original dataset 110. However, the dataset 110' can deviate from the original dataset 110 if the respective data structure definition has been modified between storage of the original dataset 110 in the database table 110 and the read operation for obtaining the dataset 110'.

For storage of the dataset 110 the serializer 112 converts the hierarchical dataset 110 into a serial format in order to provide a string 132. A GUID is generated for the string 132 by the GUID generator 126. If the length of the string 132 is below a predefined threshold value the string is not split up into sub-strings but stored in the raw data portion 122 of the database table 118.

The GUID that has been generated for the string 132 is stored in the transparent portion 120 of the database table 118 for later access to the string. Further, a counter value c=0 can be stored in the transparent portion 120 of the database table 118. The counter value is the running number of the sub-strings that have been created for a string, if any. In the example considered here there is only a single entry into the cluster table for the dataset 110 as this dataset does not surpass the predefined threshold value. A single entry that is created for a dataset 110 in the cluster table indicates that the respective string has not been split up into sub-strings.

Thus, the entry for the dataset 110 into the database table 118 consists of the GUID that has been assigned to the dataset 110, the counter value c=0 and the string that has been provided by the serializer 112.

The string that is generated by the serializer 112 for the dataset 134 has a length that exceeds the predefined maximum length. For example, the maximum length is 500 Bytes. However, another convenient choice of the maximum length is also possible. As the string that is generated by the serializer 112 for the dataset 134 surpasses the predefined maximum length, the string is split into sub-strings where each sub-string does not surpass the predefined maximum length.

In the example considered here the string that is generated by the serializer 112 for the dataset 134 is split by the database export component 114 into d=3 sub-strings (sub-string 0, sub-string 1 and sub-string 3). This is reflected by respective counter values ranging from c=0 to c=2, where d denotes the number of sub-strings, if any, into which a string is split.

Thus, the three entries in database table 118 for the string that is created for the dataset 134 each consist of the GUID assigned to the string, one of the sub-strings into which the string has been split and a counter value c that indicates the running number of the respective sub-string.

Other datasets that are held in the main memory 102 can be persistently stored in the database table 118 in an analogous way.

For reading a previously stored dataset from the database 116 the procedure is as follows: The database import component 128 reads the access key assigned to the requested dataset from the lookup table 124 using the dataset's name. The database import component 128 uses the access key obtained from the lookup table 124 in order to read the respective entry or entries from the database table 118 that match the access key.

If there is more than one entry for the same access key this indicates that there is a respective number of sub-strings that need to be read by the database import component 128 from. The database import component 128 concatenates the sub-strings in order to recover the original string such as string 132 if the dataset 110 is required.

The deserializer 130 reads the data structure of the required dataset, such as the data structure D1 in the case of the dataset 110, from the data dictionary 104. The deserializer 130 creates a new instance of the data structure D1 for generating the dataset 110'. The instance of the data structure D1, i.e. dataset 110', has the same data structure as the original dataset 110 provided that the data structure D1 had not been modified in the meanwhile. If such modifications had been performed, they are described in the storage area 108.

The deserializer 130 identifies identical field names in the string 132 and in the dataset 110'. If the field attributes of the identical field names are also identical, the deserializer 130 assigns the data value of the field in the string 132 to the respective field having the identical field name in the dataset 110'.

If the field attributes are not the same, the deserializer 130 makes a determination whether storage of the original data value in the modified field would lead to a loss of data due to the changed field attribute. If the latter is the case, the deserialization is aborted with an error message. Otherwise the deserialization continues. As a result the dataset 110' is generated and stored in the main memory 102 for further processing.

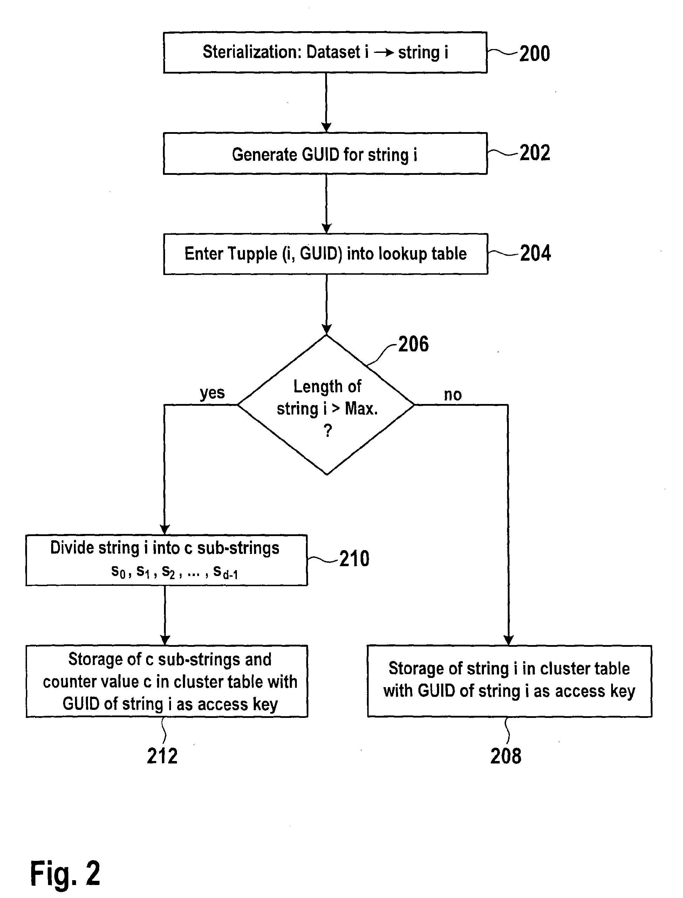

Fig. 2 shows a flowchart illustrating a method for storing a dataset that has a hierarchical data structure in a database. In step 200 the dataset i is serialized in order to provide a respective string i that has a non-hierarchical, flat data structure. For example, the string has a mark-up language format.

In step 202 an access key, such as a GUID, is generated for the string i. In step 204 a tupple consisting of the dataset's name 'i' and its assigned access key, i.e. its GUID, is entered into a lookup table for later reference.

In step 206 a determination is made whether the string i exceeds a predefined maximum length. If this is not the case the storage operation is completed in step 208 by storing the string i in a cluster table of the database using the assigned GUID as an access key. The access key is stored in a transparent portion of the cluster table whereas the string i is stored in a raw data format.

If a determination is made in step 206 that the string i does in fact exceed the predefined maximum length, the control goes to step 210. In step 210 the string i is split up into a number of d sub-strings. For example, the sub-strings s₀, s₁, s₂,... s_{d-2} all have the predefined maximum length whereas the last sub-string s_{d-1} has a length that is given by the residual of the splitting operation.

In step 212 the storage operation is completed by storing a number of d entries in the cluster table that each consist of the access key, i.e. the GUID assigned in step 202, the respective counter value ranging from c=0 to c=d-1, and the sub-strings created in step 210.

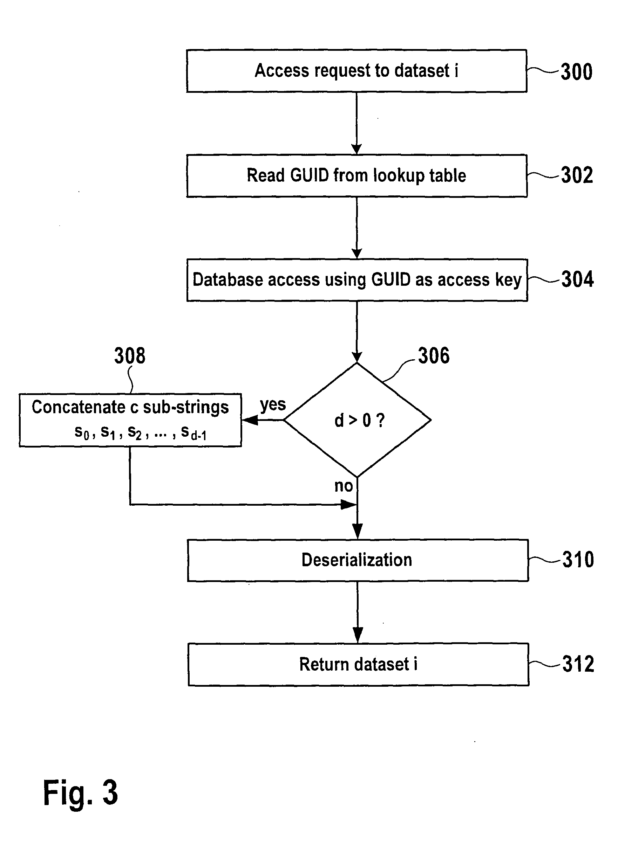

Fig. 3 shows a flowchart that illustrates an access operation to a previously stored dataset that has a hierarchical data structure. In step 300 an access request is received from a user or an application program. The access request is directed towards the dataset i. In step 302 the access key for the dataset i is read from the lookup table. In step 304 the database access is performed using the GUID read from the lookup table as an access key. By means of the GUID the database table entry or entries that have been created for the dataset i can be read.

If a number d of entries match the GUID (step 306) this indicates a respective number d of sub-strings that are concatenated in step 308 for recovery of the original string.

In step 310 the string is deserialized in order to provide the requested dataset i that is returned to the requestor in step 312.

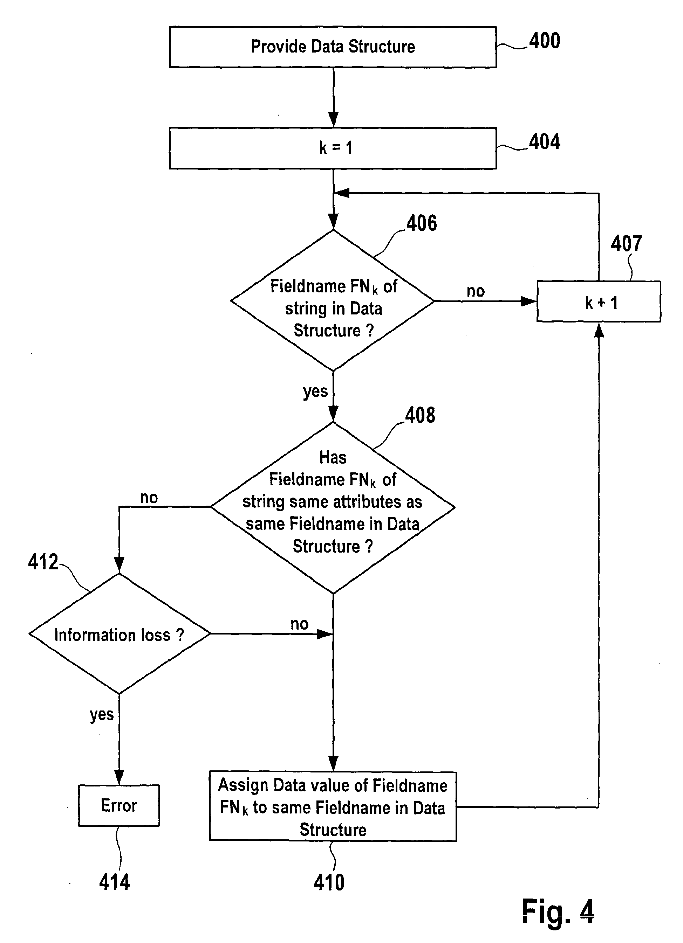

Fig. 4 shows a flowchart illustrating a preferred embodiment for the deserialization process performed in step 310 and or in step 312 of fig. 3.

In step 400 a data structure Dn is provided to the deserializer. This can be done by an application program the has requested to read the dataset i (DSi) from the data dictionary. The data structure Dn is instantiated in order to create a new dataset DS'i. The new dataset DS'i may or may not have the same data structure as the original datasets DSi depending on whether the data structure Dn has been modified between the storage of the dataset DSi in the database and the read operation for recovery of the dataset.

In step 404 the field name index k of the field names contained in the string is initialized. In step 406 a determination is made whether the field name FNₖ of the string does also occur in the data structure Dn. If this is not the case, the respective data field has been deleted and the data assigned to the respective data field in the string is not of relevancy anymore. In this case the control goes to step 407 in order to increment k. From there the control returns to step 406.

If a given field name Fnₖ of the string does occur in the data structure Dn, the control goes to step 408 where a determination is made whether that field name of the string has the same attributes as the identical field name in the data structure Dn. If this is the case the data value assigned to the field Fnₖ is assigned to the data field of the dataset DS'i that has the identical field name in step 410. From there the control goes to step 407 in order to increment the index k.

If a determination is made in step 408 that the field attributes have been modified the control goes to step 412. In step 412 a determination is made whether the assignment of the data value of the data field Fnₖ contained in the string to the data field having the identical field name but other field attributes in the dataset DS'i would lead to a loss of information. For example, a loss of information would occur when the length of the data field has been shortened, e.g. from Int 10 to Int 8. If no such information loss would occur, e.g. if the length of the data field has not been shortened but increased, the control goes to step 410. Otherwise the deserialization is aborted in step 414 with an error message.

The process of steps 400 to 414 can be performed again when the resultant DS'i needs to be written to still another data structure Dn+1 when the result is returned in step 312 (cf. Fig. 3)

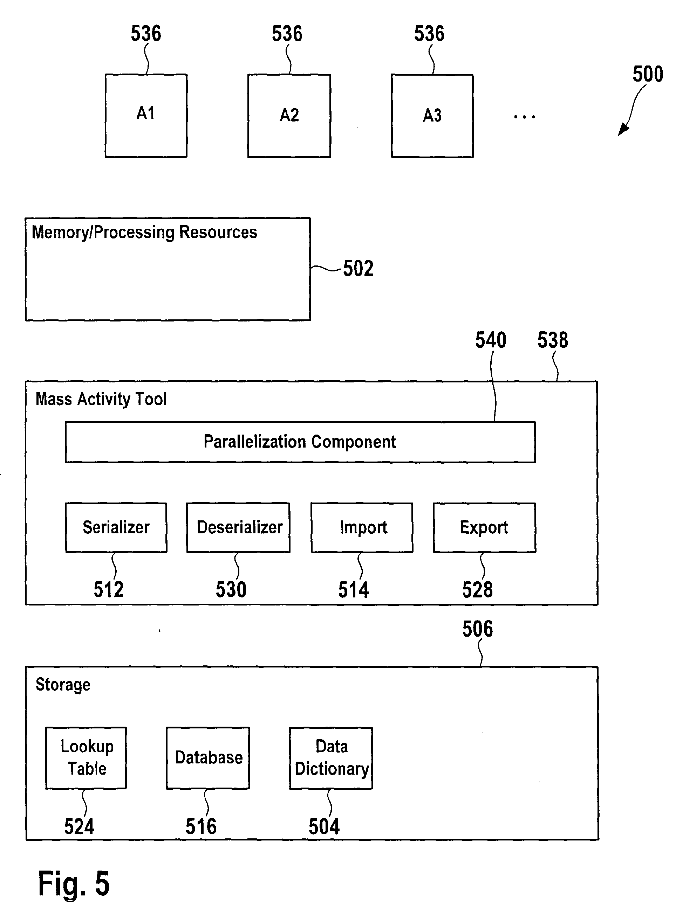

Fig. 5 shows a further preferred embodiment of a data processing system 500. Elements in the embodiment of fig. 5 that correspond to elements in the embodiment of fig. 1 are designated by like reference numerals. The data processing system 500 has a number of application programs 536 A1, A2, A3,... for performing various mass activities.

The data processing system 500 has memory and processing resources 502 that can be provided by a single computer system or by a network of interconnected computer systems.

The data processing system 500 has a mass activity tool 538 that facilitates the performance of mass activities by the application programs 536. The mass activity tool 538 includes a parallelization component 540 for parallelization of a mass activity using multiple computer systems provided by the resources 502. The mass activity tool 538 further includes a serializer 512, deserializer 530 as well as a database export component 515 and a database import component 528. Serializer 512, deserializer 530, database export component 514 and database import component 528 serve for storage of a hierarchically structured dataset in a database 516 and for reading the dataset from the database 516, respectively, as described above with respect to figs. 1 to 4.

The database 516 is persistently stored in storage 506 as well as lookup table 524 and data dictionary 504.

In operation the parallelized mass activities use the serializer 512 and the database export component 514 for persistently storing datasets in the database 516. Further, the parallelized mass activities use the deserializer 530 and the database import component 528 for efficient read access for recovery of previously stored datasets.

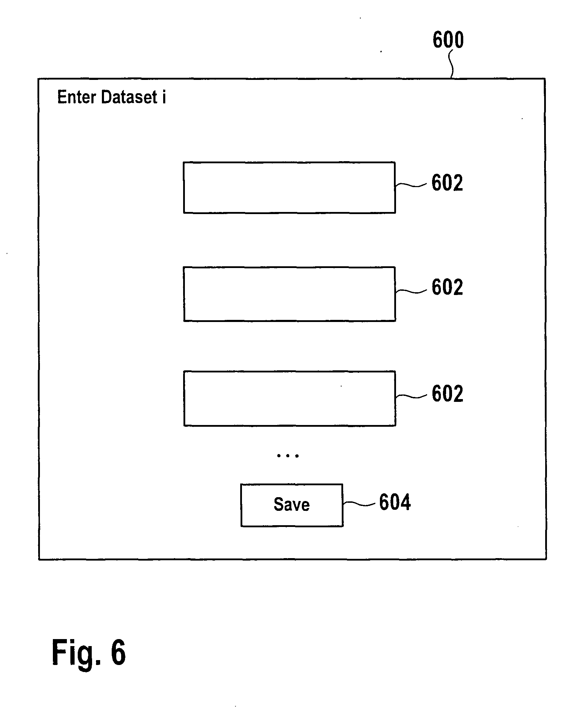

Fig. 6 shows a window 600 of a graphical user interface of the data processing system (cf. data processing system 100 of fig. 1 and data processing system 500 of fig. 5) for entry of the dataset i. The window 600 has data entry fields 602 for entry of data values for the data fields Fnₖ contained in the dataset i. After entry of the data values a user can click on a save button 604 for storage of the dataset i in the database. Depending on the implementation, this initiates storage of the dataset i in the cluster table of the database.

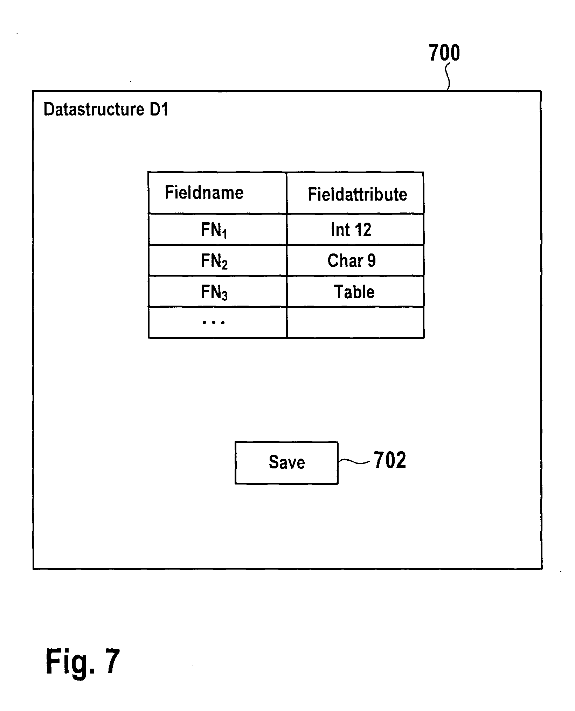

Fig. 7 shows a window 700 that is used by an administrator for modification of the data dictionary. In the example considered here the data structure D1 is displayed in the window 700. The user can edit changes by adding data fields, deleting data fields and/or modifying field attributes. In the example considered here the field attribute of data field Fn₁ is changed from integer 10 to integer 12. This modification is persistently stored in the data dictionary when the administrator clicks on the save button 702.

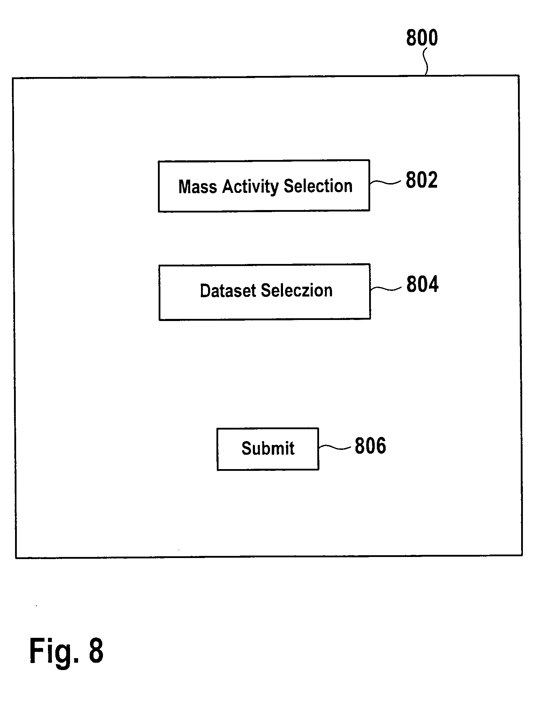

Fig. 8 shows a window 800 of the data processing system 500 of fig. 5. The window 800 has a menu 802 for selection of a mass activity. Further, the window 800 has a menu 804 for a user's selection of datasets that are to be processed by means of the selected mass activity. Clicking on the submit button 806 starts the specified mass activity.

**List of Reference Numerals**

| | |
|---|---|
| 100 | Data processing system |
| 102 | Main memory |
| 104 | Data dictionary |
| 106 | Storage |
| 108 | Run-time modifications table |
| 110 | Dataset |
| 110' | Dataset |
| 112 | Serializer |
| 114 | Database export component |
| 116 | Database |
| 118 | Database table |
| 120 | Transparent portion |
| 122 | Raw data portion |
| 124 | Lookup table |
| 126 | GUID generator |
| 128 | Database import component |
| 130 | Deserializer |
| 132 | String |
| 134 | Dataset |
| 500 | Data processing system |
| 502 | Resources |
| 504 | Data dictionary |
| 506 | Storage |
| 512 | Serializer |
| 514 | Database export component |
| 516 | Database |
| 528 | Database import component |
| 530 | Deserializer |
| 536 | Application program |
| 538 | Mass activity tool |
| 540 | Parallelization component |
| 600 | Window |
| 602 | Data entry field |
| 604 | Save button |
| 700 | Window |
| 702 | Save button |
| 800 | Window |
| 802 | Menu |
| 804 | Menu |
| 806 | Submit button |

## Claims

1. A data processing system comprising:
- data dictionary means (104; 504) for storing data descriptive of predefined hierarchical data structures (D1, D2, ..., Dn,...DN), each data structure comprising a plurality of data fields, each data field having a unique field name (FN₁, FN₂, FN₃, ... FNₖ, ...) and at least one field attribute,
- volatile storage means (102; 502) for storing a dataset (110), the dataset being an instance of one of the data structures, the dataset having a unique dataset name (i),
- serializer means (112; 512) for conversion of the dataset into a data string (132),
- means (126) for generating an access key for the data string,
- non-volatile storage means (106, 116; 506, 516) for storing a database table (118),
- database export means (114; 514) for storing the string in the database table using the access key,
- means (124) for storing an assignment of the access key to the dataset name.

2. The data processing system of claim 1, the access key being a globally unique identifier.

3. The data processing system of claim 1 or 2, further comprising means (114) for dividing the string into sub-strings, each sub-string having a predefined maximum length, and the database export means being adapted to store the string and its assigned access key in the database table and, if the length of the string exceeds the predefined maximum length, to store the sub-strings and a running number of the sub-strings in the database table.

4. A method of storing a dataset (110) having a hierarchical data structure in a database, the method comprising:
- converting the dataset into a data string (132),
- generating an access key for the data string,
- storing the string in a database table (118) using the access key,
- storing a unique name of the dataset and the assigned access key in a lookup table (124).

5. The method of claim 4, further comprising dividing the string into a number of sub-strings if the string exceeds a predefined maximum length, and storing the sub-strings and a running number (c) of the sub-strings in the database table.

6. The method of claim 4 or 5, wherein the string or the sub-strings are stored in a binary format in the database table.

7. A computer program product comprising computer executable instructions for performing a method in accordance with any one of the claims 4, 5 or 6.

8. A data processing system comprising:
- data dictionary means (104; 504) for storing data descriptive of predefined hierarchical data structures (D1, D2, ..., Dn,...DN), each data structure comprising a plurality of data fields, each data field having a unique field name (FN1, FN2, FN3, ... FNk, ...) and at least one field attribute,
- a database table (118) for storing a string (132) such that the sting is accessible by means of an access key,
- means (124) for storing an assignment of the access key to a unique name of a dataset, the dataset being an instance of one of the data structures,
- database import means (128; 528) for reading the string from the database table using the access key,
- deserializer means (130) for conversion of the string into the dataset,
- volatile storage means (102; 502) for storing the dataset.

9. The data processing system of claim 8, the database table being adapted to store a number of sub-strings of the string and a running number of each of the sub-strings, the database import means being adapted to concatenate the sub-strings in order to provide the string.

10. The data processing system of claim 8 or 9, the data descriptive of the predefined hierarchical data structures being editable for modification of at least the one of the data structures.

11. The data processing system of any one of the preceding claims 8, 9, or 10, the deserializer means being adapted to identify identical field names contained in the string and in the data structure of the dataset for assignment of data values contained in the string to data fields of the data set.

12. The data processing system of claim 10 or 11, the deserializer means being adapted to compare the field attributes of identical field names and to generate a message if the field attributes do not match.

13. The data processing system of any one of the preceding claims 8 to 12, further comprising a mass activity tool (538) and a number of application programs (536) for performing mass activities using the database table.

14. A method of reading a dataset having an hierarchical data structure from a database table, the dataset having a unique dataset name, the method comprising:
- reading an access key from a lookup table (524) using the dataset name,
- reading a string (132) from the database table (118) using the access key,
- deserializing (130; 530) the string for conversion to the dataset.

15. The method of claim 14, further comprising identifying identical field names contained in the string and in the data structure of the dataset for assignment of data values contained in the string to data fields of the data set

16. A computer program product comprising computer executable instructions for performing a method in accordance with any one of the claims 14 or 15.
